Europäisches Patentamt

European Patent Office

Office européen des brevets

(11) Publication number: **0 416 598 A2**

# EUROPEAN PATENT APPLICATION

(21) Application number: 90117128.0

(22) Date of filing: 05.09.90

(51) Int. Cl.⁵: **H04N 1/00**

(30) Priority: 06.09.89 JP 231986/89

(43) Date of publication of application:
13.03.91 Bulletin 91/11

(84) Designated Contracting States:
DE GB

(71) Applicant: SHARP KABUSHIKI KAISHA
22-22 Nagaike-cho Abeno-ku
Osaka-shi Osaka 545(JP)

(72) Inventor: Takehiro, Hidemi
383-2 Iida, Hachihonmatsu-cho
Higashihiroshima-shi, Hiroshima-ken(JP)
Inventor: Moriwaki, Yoshitsugu
982-7 Iida, Hachihonmatsu-cho
Higashihiroshima-shi, Hiroshima-ken(JP)

(74) Representative: TER MEER - MÜLLER -
STEINMEISTER & PARTNER
Mauerkircherstrasse 45
W-8000 München 80(DE)

(54) Facsimile apparatus.

(57) A transmitter and receiver (5) in a branch apparatus (3) of a cordless telephone (1) includes a modular connector (7) to which a modular connector (8) of a handset (6) is detachably connected. A facsimile apparatus (4) also includes a modular connector (13). Modular connector (13) is structured to be detachably connected to modular connector (7) when modular connector (8) of handset (6) is pulled out from modular connector (7) of transmitter and receiver (5) in branch apparatus (3). Connection of modular connector (13) of facsimile apparatus to modular connector (7) of the transmitter and receiver causes facsimile apparatus (4) to be coupled to master apparatus (1) through transmitter and receiver (5) so as to allow radio communication. As a result, facsimile apparatus (4) is enabled to transmit and receive picture data to and from a telephone line without using an acoustic signal

EP 0 416 598 A2

EP 0 416 598 A2

# FIG.1

FACSIMILE
APPARATUS

2

## FACSIMILE APPARATUS

### BACKGROUND OF THE INVENTION

#### Field of the Invention

The present invention relates generally to facsimile apparatuses, and more particularly, to a facsimile apparatus for picture communication by a cordless telephone or a radio telephone.

#### Description of the Background Art

As is known, a facsimile apparatus comprises a picture reader for reading a set original and outputting the same as picture information, a picture printer for recording a reception picture corresponding to the received picture information and a transmitter and receiver for transmitting and receiving the picture information, which transmitter and receiver being connected to a telephone line to send and receive the picture information to and form the other facsimile apparatuses.

In recent years, with the spread of cordless telephones, improvements have been made to make a cordless telephone more usable by connecting a facsimile apparatus to a branch apparatus of the cordless telephone and making the facsimile apparatus movable. Commonly used as a connecting means between a facsimile apparatus and a cordless telephone is an acoustic coupler converting an electric signal from the facsimile apparatus into an acoustic signal to transmit the same to a transmitter and receiver of a branch apparatus of the cordless telephone, and converting the acoustic output from the transmitter and receiver into an electric signal to supply the same to the facsimile apparatus. Also proposed is a system of transmitting and receiving picture information of a facsimile apparatus having a branch function of a transmitter and receiver and a handset as a connecting means by wireless-connecting the transmitter and receiver of the facsimile apparatus with a master apparatus of a cordless telephone.

However, in the system using the acoustic coupler as the connection means, after once converting an electric signal into an acoustic signal, it is necessary to perform a signal processing of reconverting the same to an electric signal, which conversion causes a considerable deterioration of the signal. In addition, it is vulnerable to an effect of the surrounding noise because of the communication by using the acoustic signal, which might result in insufficient transmission of the picture information.

Meanwhile, in the system adding, as the connection means, the branch apparatus function of the cordless telephone to the facsimile apparatus, the circuit arrangement of the facsimile apparatus is complicated and the number of parts thereof is increased, thereby increasing the price of the facsimile apparatus.

Such problems as described above are posed not only by the cordless telephone but also by such a radio telephone as a land mobile radio telephone for use in transmitting and receiving picture information.

### SUMMARY OF THE INVENTION

An object of the present invention is to provide a facsimile apparatus of a simple structure allowing fine transmission of picture information through a cordless telephone with less signal deterioration.

Another object of the present invention is to provide a facsimile apparatus of a simple structure allowing fine transmission of picture information through a radio telephone with less signal deterioration.

The facsimile apparatus according to the present invention is directed to transmitting and receiving picture information by using a master apparatus connected to a telephone line and a cordless telephone comprising a branch apparatus communicating with the master apparatus by radio, and the facsimile apparatus comprises reading means, printing means, transmitting and receiving means and connector means. The reading means reads picture information from the set original and outputs the same. The printing means prints the picture based on the inputted picture information. The transmitting and receiving means is connected between the reading means and the printing means to transmit and receive the picture information. The connector means detachably and electrically connects the transmitting and receiving means with the branch apparatus of the cordless telephone, thereby coupling the transmitting and receiving means to the master apparatus of the cordless telephone to enable communication therebetween by radio via the branch apparatus of the cordless telephone.

Another facsimile apparatus according to the present invention is directed to transmission and reception of picture information by using a radio telephone communicably connected to a telephone line by radio communication with a relay station and the apparatus comprises reading means, printing means, transmitting and receiving means and connector means. The reading means reads the picture information from the set original and outputs the same. The printing means prints the picture based on the inputted picture information. The transmitting and receiving means is connected to the reading means and the printing means to transmit and receive the picture information. The connector means detachably and electrically connects the transmitting and receiving means with the radio telephone, thereby coupling the transmitting and receiving means to the relay station to enable communication therebetween by radio via the radio telephone.

According to the present invention, the picture information can be transmitted through the cordless telephone or the radio telephone without using an acoustic coupler, so that it is possible to prevent signal deterioration and transmit the picture information finely. In addition, the facsimile apparatus requires no function of communication by radio, which makes the structure of the apparatus simple and makes the apparatus compact and low priced.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a diagram showing a facsimile apparatus using a cordless telephone according to one embodiment of the present invention.
Fig. 2 is a block diagram showing the arrangement of the branch apparatus of the cordless telephone shown in Fig. 1.
Fig. 3 is a block diagram showing the arrangement of the facsimile apparatus shown in Fig. 1.
Fig. 4 is a diagram showing a facsimile apparatus using a cordless telephone according to another embodiment of the present invention.
Fig. 5 is a block diagram showing the arrangement of the branch apparatus of the cordless telephone shown in Fig. 4.
Fig. 6 is a diagram showing a facsimile apparatus using a radio telephone according to a further embodiment of the present invention.
Fig. 7 is a block diagram showing one example of a data communication system for the radio telephone shown in Fig. 6.

DESCRIPTION OF THE PREFERRED EMBODIMENTS

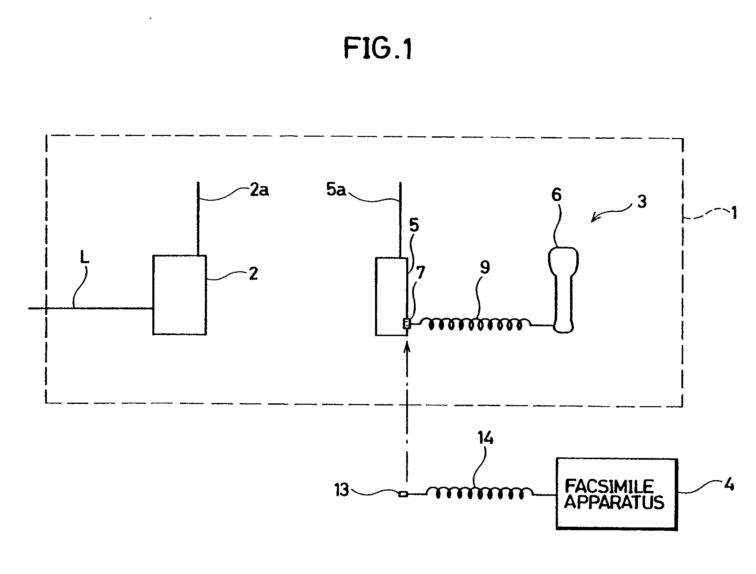

Fig. 1 shows the facsimile apparatus using the cordless telephone according to one embodiment of the present invention. In the drawing, the cordless telephone 1 includes a master apparatus 2 and a branch apparatus 3.

Master apparatus 2 includes a transmission and reception circuit, a radio communication circuit and the like, though they are not shown. A telephone line L is connected to the transmission and reception circuit through an external connection terminal. An antennae 2a is connected to the radio communication circuit. The radio communication circuit transmits and receives a signal to and from branch apparatus 3. The transmission and reception circuit and the radio communication circuit are connected with each other in master apparatus 2, whereby branch apparatus 3 is communicably coupled to the telephone line L through master apparatus 2.

Branch apparatus 3 includes a transmitter and receiver 5 and a handset 6, transmitter and receiver 5 and handset 6 being connected with each other by a curled cord 9.

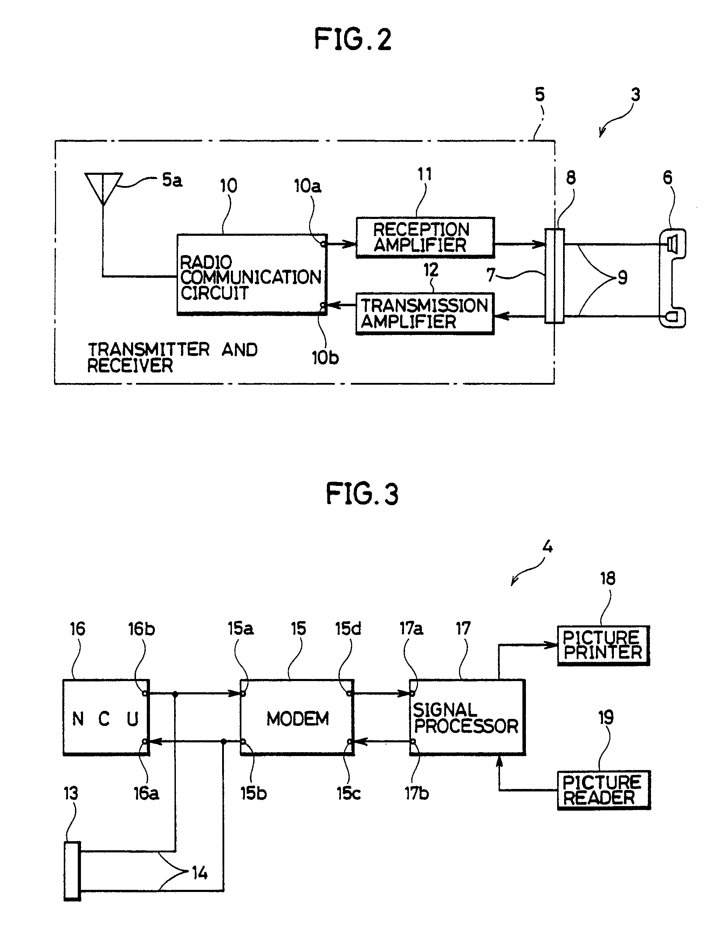

Fig. 2 shows the more detailed structure of branch apparatus 3 shown in Fig. 1. In the drawing, transmitter and receiver 5 includes a radio communication circuit 10, a reception amplifier 11, a transmission amplifier 12, a modular connector 7 and an antenna 5a. Radio communication circuit 10 is connected to antenna 5a. Radio communication circuit 10 communicates a signal by radio with the radio communication circuit in master apparatus 2 through antenna 5a. Output end 10a of radio communication circuit 10 is connected to the input end of reception amplifier 11. Reception amplifier 11 amplifies a reception audio signal from master apparatus 2 received by radio communication circuit 10 and outputs the amplified audio signal. Input end 10b of radio communication circuit 10 is connected to the output end of transmission amplifier 12. Transmission amplifier 12 amplifies a transmission audio signal inputted from handset 6 and applies the amplified audio signal to radio communication circuit 10. Modular connector 7 is connected to the output end of reception amplifier 11 and the input end of transmission amplifier 12. Handset 6 is connected to one end of curled cord 9. The other end of curled cord 9 is connected to a modular connector 8. Modular connector 8 is detachably connected to modular connector 7 of the transmitter and receiver.

In cordless telephone 1 of such an arrangement as described above, when a reception audio signal is inputted to master apparatus 2 through the telephone line L, master apparatus 2 transmits the reception audio signal to branch apparatus 3 by radio communication. The branch apparatus 3 receives the reception audio signal transmitted from master apparatus 2 at radio communication circuit 10. The reception audio signal received at the radio communication circuit 10 is amplified in reception amplifier 11 and then transmitted to the speaker of handset 6 through modular connectors 7 and 8. Accordingly, tone corresponding to the reception audio signal is outputted from the speaker. Meanwhile, after amplified in transmission amplifier 12 through modular connectors 8 and 7, the transmission audio signal inputted from the microphone of handset 6 is applied to radio communication circuit 10. Radio communication circuit 10 transmits the applied transmission audio signal to master apparatus 2 by radio communication. Master apparatus 2 receives the transmission audio signal transmitted from branch apparatus 3, subjects the same to an adequate signal processing and then sends the processed signal to the telephone line L.

Referring to Fig. 3, the arrangement of facsimile apparatus 4 shown in Fig. 1 will be described. In the drawing, facsimile apparatus 4 includes a modular connector 13, a modem 15, NCU (Network Control Unit)16, a signal processor 17, a picture printer 18 and a picture reader 19. In the drawing, modular connector 13 is connected to input/output ends 15a and 15b at one side of modem 15 through a curled cord 14. Modem 15 is a device for transmitting and receiving picture information and includes modulator, demodulator and the like. One input end 15a and one output end 15b of modem 15 are respectively connected to an output end 16b and an input end 16a of NCU 16 having a function of controlling connection of a circuit switching network. The other input end 15c and the other output end 15d of modem 15 are connected to an output end 17b and an input end 17a of signal processor 17 for processing a signal of the picture information, respectively. Signal processor 17 is connected to picture printer 18 for recording reception picture corresponding to the received picture information and picture reader 19 for reading the set original and outputs the same as the picture information. The above-described modular connector 13 is detachably connected to modular connector 7 of transmitter and receiver 5 in branch apparatus 3.

Operations of the facsimile apparatus according to the embodiment shown in Figs. 1 through 3 will be described.

First, a receiving operation of the picture information will be described. In a normal state, modulator connector 8 is connected to modular connector 7, whereby transmitter and receiver 5 and handset 6 are connected with each other to enable transmission and reception therebetween. In this state, when a reading signal is applied to master apparatus 2 through the telephone line L, the reception is announced by the ringing of the bell or the like at branch apparatus 3. In response to the announcement, the operator picks up handset 6 of branch apparatus 3 and holds the same to his ear and mouth. At this time, the operator judges from transmission tone heard from the speaker of handset 6 whether the reception signal requires a call or reception of facsimile. When the operator confirms that the transmission tone from handset 6 means the reception of the facsimile, he pulls out modular connector 8 of handset 6 from modular connector 7 of transmitter and receiver 5 and connects modular connector 13 of facsimile apparatus 4 to modular connector 7 of transmitter and receiver 5. Thereafter, the operator starts a predetermined facsimile communication protocol by depressing a communication key (not shown) provided in facsimile apparatus 4 or the like. Accordingly, a known reception processing is performed and picture printer 18 is operated based on the received picture information to record the reception picture. Then, when the reception of the picture information is finished, modular connector 13 of the facsimile apparatus connected to modular connector 7 of handset 6 is pulled out and connected to modular connector 8 of handset 6.

A transmitting operation of the picture information will be described. In this case, the operator sets the original in picture reader 19 of facsimile apparatus 4 and calls a transmission destination to establish a channel. Thereafter, he pulls out modular connector 8 of handset 6 connected to modular connector 7 and connects the same to modular connector 13 of facsimile apparatus 4. Subsequently, the operator starts predetermined transmission protocol by depressing the communication key (not shown) of facsimile apparatus 4 or the like, whereby picture reader 19 is operated to read the original. Thereafter, a known transmission processing is performed to sequentially transmit the picture information. Namely, the picture information outputted from facsimile apparatus 4 is applied to transmitter and receiver 5 of branch apparatus 3 through modular connectors 13 and 7 and transmitted to master apparatus 2 by radio communication circuit 10. Master apparatus 2 receives the picture information transmitted from transmitter and receiver 5 and sends the same to the telephone line L. When the transmission of the picture information is finished, the operator pulls out modular connector 13 of facsimile apparatus 4 connected to modular connector 7 of transmitter and receiver 5 and connects the same to modular connector 8 of handset 6. As a result, handset 6 is restored to the transmission and reception enable state again.

While in the foregoing embodiment, the description is made of the separate type cordless telephone having separate transmitter and receiver 5 and handset 6, the present invention can be applied to such a cordless telephone having integrated transmitter and receiver and handset. The embodiment using such integrated type cordless telephone will be described in the following.

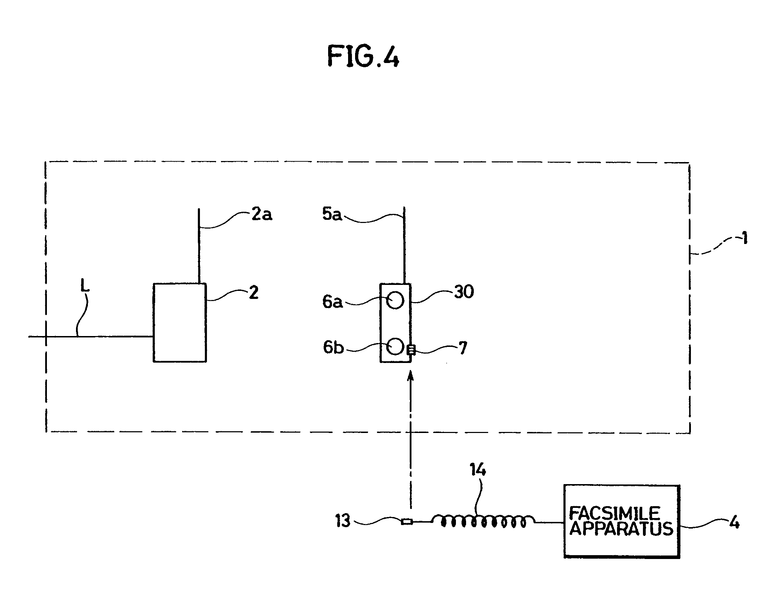

Fig. 4 is a diagram showing another embodiment of the present invention using the cordless telephone having an integral type branch apparatus. In the drawing, the arrangements of master apparatus 2 and facsimile apparatus 4 are the same as those of the above-described embodiment shown in Figs. 1 through 3. Namely, the present embodiment differs from the above-described embodiment in an arrangement of a branch apparatus 30.

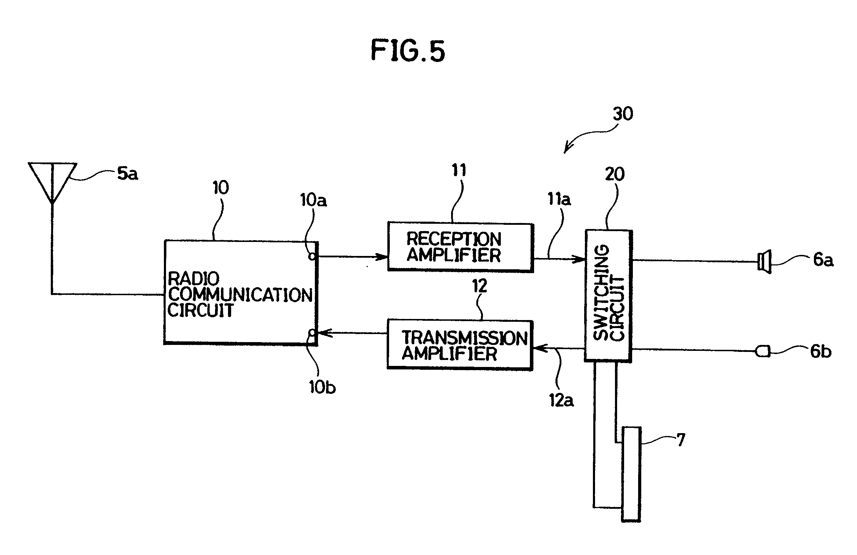

Fig. 5 is a block diagram showing the arrangement of the branch apparatus in Fig. 4. In the drawing, similarly to branch apparatus 3 shown in Fig. 2, branch apparatus 30 includes a radio communication circuit 10, a reception amplifier 11, a transmission amplifier 12 and an antenna 5a. Branch apparatus 30 further includes a switching circuit 20, a speaker 6a, a microphone 6b and a modular connector 7. Speaker 6a and microphone 6b constitute a handset. Modular connector 7 is a modular connector dedicated to facsimile apparatus 4 only. Switching circuit 20 selectively switches the handset comprising speaker 6a and microphone 6b and modular connector 7 to connect the same to reception amplifier 11 and transmission amplifier 12, respectively. Namely, in a normal mode, switching circuit 20 connects speaker 6a and microphone 6b to the output end of reception amplifier 11 and the input end of transmission amplifier 12, respectively. Meanwhile, in a transmission and reception mode of facsimile apparatus 4, switching circuit 20 connects modular connector 7 to the output end of reception amplifier 11 and the input end of transmission amplifier 12. The switching of switching circuit 20 is controlled in response to a mode selecting switch (not shown) provided, for example, in branch apparatus 30.

Operations of the embodiment shown in Figs. 4 and 5 will be described.

In the normal mode, switching circuit 20 connects reception amplifier 11 to speaker 6a and transmission amplifier 12 to microphone 6b. As a result, transmission and reception of an audio signal is performed in the same manner as that of a common cordless telephone.

When transmitting and receiving the picture information by facsimile apparatus 4, the operator depressing the mode selecting switch (not shown) or the like to switch switching circuit 20 to modular connector 7 and connects modular connector 13 of facsimile apparatus 4 to modular connector 7. As a result, facsimile apparatus 4 and the transmitter and receiver of branch apparatuses are connected with each other to enable transmission and reception of the picture information. The details of the other operations are the same as those of the above-desceribed embodiment shown in Figs. 1 through 3 and therefore no description will be made thereof.

While the foregoing embodiment is described with respect to the transmission of the picture information by using the cordless telephone, the present invention is applicable also to a radio telephone such as a land mobile radio telephone or a portable radio telephone. The embodiment using such radio telephone will be described in the following.

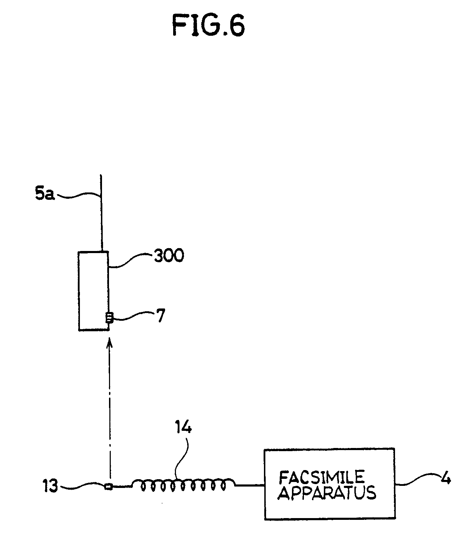

Fig. 6 is the diagram showing a further embodiment of the present invention using a radio telephone. In the drawing, arrangement of the radio telephone 300 can be completely the same as that of branch apparatus 30 shown in Fig. 5, with a transmission output of radio communication circuit 10 being made larger and the transmission and reception frequency and the transmission and reception protocol agree with those of land mobile radio telephones or portable radio telephones. In addition, arrangements of a facsimile apparatus 4, and a modular connector 13 and a curled cord 14 attached thereto can be completely the same as those shown in Fig. 3.

Since radio telephone 300 is supposed to be used while moving, no master apparatus is provided such as to be attached thereto. In place of that, a radio station is set up in each area of the region where the radio telephone is transferred, whereby radio telephone 300 communicates with the radio station.

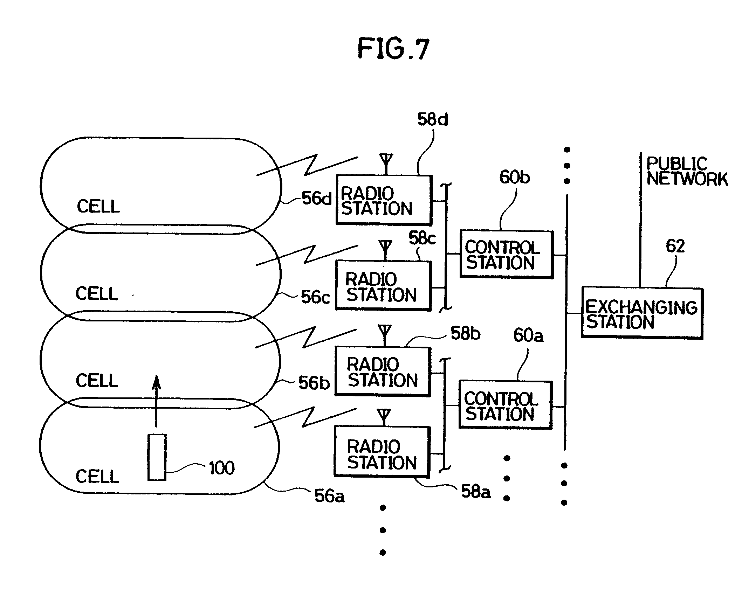

Fig. 7 is the block diagram showing one example of a data communication system for radio telephone 300 shown in Fig. 6. In the drawing, this data communication system includes a plurality of radio stations 58a, 58b, 58c, 58d... equipped to send radio wave for data communication to a restricted region (cell) in its own surrounding and receiving the radio wave sent from a moving station 100 (loaded with radio telephone 300) in the cell, control stations 60a, 60b... for controlling the plurality of radio stations in a predetermined region and for relaying the communication between each radio station and a public network, and an exchanging station 62 connected to the plurality of control stations for connecting the control stations with the public network and connecting lines between terminals of the data transmission.

Radio stations 58a, 58b, 58c and 58d serve cells 56a, 56b, 56c and 56d, respectively. A predetermined name (number) is allotted to each cell. Cells 56a and 56b partly overlap with each other and so do cells 56b and 56c, and cells 56c and 56b. Thus, the cells extend each of adjacent cells overlapping with each other to cover, for example, all the domestic regions.

In Fig. 7, control station 60a is connected to radio stations 58a, 58b and the like. Control station 60b is connected to radio stations 58c, 58d and the like. Exchanging station 62 is supplied with a function of connecting the lines as described above and storage means (not shown) for storing, for example, the present location of moving station 100 in the form of the cell name.

It is assumed that moving station 100 (for example an automobile or a person now moving) loaded with radio telephone 300 is in cell 56a. At this time, moving station 100 is connected to the public network via control station 60a and exchanging station 62 by communicating with radio station 58a by radio. Communication between moving station 100 and radio station 58a is carried out by using a control channel and a communication channel distinguished from each other based on a frequency.

The control channel further includes, for example, a system announcing channel, a calling channel, an an access channel or the like, each channel being divided according to the frequency. The system announcing channel announces the number of the cell, frequencies of the calling channel and the access channel and the like to the moving station in the cell which the radio station serves. The calling channel is used, when a call is made from the public network to the moving station in the cell, for calling the station. The access channel is used when the called moving station responds or a moving station requires connection with one terminal of the public network makes a call.

The control channel is settled, for example, for each cell and allotted commonly to all the radio stations under the control station and differently from a control channel of the adjacent control station. Moving station 100 sequentially retrieves a predetermined plurality of control channels to find a control channel of the cell in which moving station 100 is located and tunes out the channel. As a result, moving station 100 finds the access channel or the calling channel and tunes its controlling channels to the same.

Calling is made by using the control channel and a separate communication channel. The communication channel is allotted in plural to each radio station. Separate communication channels are allotted to the adjacent radio stations in order to avoid radio interference. Every time moving station 100 is called or the same makes a calling each communication channel is allotted to the moving station 100.

It is assumed that moving station 100 is located in cell 56a and it is communicating with radio station 58a. When moving station 100 enters the boundary region of the other adjacent cell 56b, moving station 100 simultaneously receives radio wave from radio station 58a and that of the radio station 58b. Control stations 60a monitors communication state of radio stations 58a and 58b. Control station 60a monitors a S/N ratio of the reception signal from moving station 100 and switches the connection line with moving station 100 to radio station 58b when the communication state of radio station 58b becomes more preferable. In the meantime, moving station 100 performs the similar processing to switch the frequency of the radio wave to a frequency for use in radio station 58b.

When moving station 100 moves between cells under different control stations, for example, in the boundaries between cells 56b and 56c, control station 60a selects the adjacent control station 60b and transmits the information of the selection to exchanging station 62. Exchanging station 62 receives the information, confirms the state of the communication with moving station 100 by radio stations 58b and 58c via control stations 60a and 60b and switches the line connection from control station 60a to control station 60b. As a result, moving station 100 is enabled to communicate data via radio station 58c in cell 56c.

The data communication system shown in Fig. 7 is a mere example and data communication systems of other arrangements each having radio telephone 300 and a telephone line connected with each other may be used.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A facsimile apparatus transmitting and receiving picture information by using a cordless telephone (1) including a master apparatus (2) connected to a telephone line and a branch apparatus (3 or 30) for communicating with said master apparatus by radio, comprising:

reading means (19) for reading the picture information from a set original and outputting the same,

printing means (18) for printing picture based on the inputted picture information,

transmitting and receiving means (15, 17) connected to said reading means and said printing means for transmitting and receiving the picture information, and

connector means (13) for detachably and electrically connecting said transmitting and receiving means with said branch apparatus,

said transmitting and receiving means and said master apparatus being coupled by said connector means to allow radio communication through said branch apparatus.

2. The facsimile apparatus according to claim 1, wherein

said branch apparatus comprises:

a transmitter and receiver (5) capable of communicating with said master apparatus by radio,

a handset (6),

a first modular connector (7) connected to said transmitter and receiver,

a second modular connector (8) connected to said handset and detachably connectable with said first modular connector, and

said connector means includes a modular connector (13) detachably connectable to said first modulator connector.

3. The facsimile apparatus according to claim 1, wherein

said branch apparatus comprises:

a transmitter and receiver (10-12) capable of communicating with said master apparatus by radio,

a handset (6a, 6b),

a modular connector (7),

switching means (20) for selectively switching said handset and said modular connector to connect the same to said transmitter and receiver,

said connector means includes a modular connector (13) detachably connectable to said modular connector.

4. A facsimile apparatus for transmitting and receiving picture information by using a radio telephone (300) communicably connected to a telephone line to by radio communicate between relay stations (58a-58d), comprising:

reading means (19) for reading the picture information from a set original,

printing means (18) for printing picture based on the inputted picture information,

transmitting and receiving means (15-17) connected to said reading means and said printing means for transmitting and receiving the picture information, and

connector means (13) for detachably and electrically connecting said transmitting and receiving means to said radio telephone,

said transmitting and receiving means and said relay stations being coupled by said connector means to allow radio communication through said radio telephone.

FIG.1

FACSIMILE APPARATUS

## FIG.2

## FIG.3

## FIG.4

FACSIMILE APPARATUS

# FIG.5

EP 0 416 598 A2

# FIG.6

# FIG.7

EP 0 416 598 A2